# EUROPÄISCHE PATENTSCHRIFT

(11) **EP 2 350 506 B1**
(45) Veröffentlichungstag und Bekanntmachung des Hinweises auf die Patenterteilung: **24.10.2012**
(21) Anmeldenummer: 09760106.6
(22) Anmeldetag: 19.11.2009
(51) Int. Cl.: F16K 3/26, F16K 31/124

(54) **HYDRAULISCHE VENTILANORDNUNG MIT EINEM EINEN DRUCKAUSGEGLICHEN ANGEORDNETEN SCHLIESSKÖRPER AUFWEISENDEN EINBAUVENTIL**
HYDRAULIC VALVE ASSEMBLY HAVING A CARTRIDGE INSERT VALVE EXHIBITING A CLOSING ELEMENT ARRANGED IN A PRESSURE EQUALIZED MANNER
AGENCEMENT DE SOUPAPE HYDRAULIQUE MUNI D'UNE SOUPAPE INTEGREE PRESENTANT UN CORPS DE FERMETURE A COMPENSATION DE PRESSION

(30) Priorität: 26.11.2008 DE 102008059058; 12.10.2009 DE 102009049140
(43) Veröffentlichungstag der Anmeldung: 03.08.2011
(73) Patentinhaber: Parker Hannifin GmbH, 33659 Bielefeld (DE)
(72) Erfinder: BUNGE, Daniel, 40668 Meerbusch (DE); SCHEFFEL, Gerd, 41352 Korschenbroich (DE)
(74) Vertreter: Müller, Karl-Ernst
(86) Internationale Anmeldenummer: PCT/EP2009/008235
(87) Internationale Veröffentlichungsnummer: WO 2010/060565

(56) Entgegenhaltungen:
- WO-A1-02/21032
- DE-A1-102005 025 916
- US-A- 3 889 709
- US-A- 4 795 129

## Beschreibung

Die Erfindung betrifft eine hydraulische Ventilanordnung mit einem in eine in einem Ventilblock ausgebildete und mit in dem Ventilblock angeordneten Strömungskanälen in Verbindung stehende Bohrung eingestecktem Einbauventil, bestehend aus einer in die Bohrung eingesetzten Ventilhülse und einem darin geführten Schließglied, wobei die Ventilhülse einen Ventilsitz für das Schließglied in dessen Schließstellung ausbildet und das Schließglied mittels einer angeschlossenen hydraulischen Vorsteuerung zwischen seiner auf dem Ventilsitz aufsitzenden und die Strömungskanäle gegeneinander trennenden Schließstellung und einer in der Ventilhülse verschobenen Öffnungsstellung bewegbar ist und die Bohrung mit dem darin eingesteckten Einbauventil über einen mit dem Ventilblock verbundenen Ventildeckel dicht verschlossen ist.

Eine derartige Ventilanordnung ergibt sich aus dem Produktkatalog "Instustriehydraulikventile" der Firma Parker Hannifin GmbH & Co. KG, Serie TDA, Katalogseite 8-69. Bei dem derart ausgebildeten und zum Einsatz in einer in einem gemäß DIN ISO 7368 ausgestalteten Ventilblock eingebrachten Bohrung vorgesehenen Einbauventil wirkt die hydraulische Vorsteuerung auf die gesamte obere, dem Ventildeckel zugewandte Fläche des Schließgliedes. Insbesondere mit steigenden Nenngrößen des Einbauventils erhöhen sich der von der hydraulischen Vorsteuerung aufzubringende Druck wie auch entsprechend der Volumenstrom an Steueröl, um das Schließglied entgegen dem in dem in der Verstellrichtung des Schließgliedes in der Ventilhülse verlaufenden Strömungskanal herrschenden und damit auf das Schließglied einwirkenden Druck in seiner Schließstellung zu halten. Dieser erhebliche Steuerdruck wirkt über das Schließglied auch auf die Ventilhülse und drückt die Ventilhülse in die Bohrung des Ventilblocks ein. Um dem entgegenzuwirken, sieht die DIN ISO 7368 vor, die Bohrung zur Aufnahme des Einbauventils mit einer Stufe abzusetzen, so dass die Ventilhülse auf der Stufe der Bohrung eine Anlage findet, wobei der an die Bohrung anschließende, im Ventilblock ausgebildete Strömungskanal einen kleineren Durchmesser aufweist als die Bohrung.

Mit der bekannten Ventilanordnung ist der Nachteil verbunden, dass es aufgrund unvermeidbarer Toleranzen bei der Herstellung der Bohrung im Ventilblock zu unterschiedlichen Stellungen der Ventilhülse bzw. von deren Ventilsitz im Verhältnis zum Ventildeckel kommen kann, da die Ventilhülse beim Betrieb des Einbauventils von dem Schließglied unter der Wirkung des Steueröldrucks jeweils in Anlage an der toleranzbedingt eine unterschiedliche Lage aufweisenden Stufe gedrückt wird. Dies erweist sich insbesondere bei als Regelventilen ausgebildeten Einbauventilen als nachteilig, bei denen der Öffnungszustand, also die jeweilige Stellung des Schließgliedes zum Ventilsitz der Ventilhülse, maßgeblich ist.

Aus der WO 2002/021032 A1 ist weiterhin eine Ventilanordnung mit einem in eine Ventilblockbohrung einsteckbaren Einbauventil bekannt, dessen in einer Ventilhülse bewegliches Schließglied durch einen proportional verstellbaren Elektromagneten zwischen seiner Öffnungsstellung und seiner Schließstellung steuerbar ist. Um die Stellkräfte des Schließgliedes zu mindern, wird der stirnseitig auf das Schließglied wirkende Druck über einen entsprechend vorgesehenen Verbindungsweg in einen rückwärtigen Druckraum geführt, so dass das Schließglied im wesentlichen druckausgeglichen ist. Hierzu weist gemäß einem Ausführungsbeispiel der WO 2002/021032 A1 das zur Ausbildung eines Strömungsweges zwischen den im Ventilblock ausgebildeten Strömungskanälen als Hohlschieber mit zugeordneten radialen Manteldurchbrüchen ausgebildete Ventilglied ausgehend von seinem Innenraum noch eine eine Verbindung zum rückwärtigen Druckraum herstellende Innenbohrung auf, in die ein den Innenraum durchsetzendes und bis in den zugeordneten Strömungskanal des Ventilblockes reichendes Röhrchen eingesetzt ist, mittels dessen der im Strömungskanal anstehende Druck für den rückwärtigen Druckraum abgreifbar ist.

Der Erfindung liegt die Aufgabe zugrunde, eine Ventilanordnung mit den gattungsgemäßen Merkmalen so auszugestalten, dass sich eine von den Herstellungstoleranzen unabhängige Lage des Einbauventils im Ventilkörper ergibt.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass das Schließglied als ein eine Durchgangsbohrung und dadurch an seinen beiden Enden jeweils Ringflächen mit identischer Flächengröße aufweisender hülsenförmiger Schließkörper ausgebildet und in dem Ventildeckel eine mit der Durchgangsbohrung des Schließkörpers korrespondierende Druckausgleichskammer ausgebildet ist derart, dass der Schließkörper beidseitig mit dem in seiner Verstellrichtung wirkenden Druck beaufschlagt und in der Ventilhülse vollständig druckausgeglichen gelagert ist, wobei zur Verstellung des Schließkörpers an dessen äußerem Umfang ein radial vorstehender Bund mit in der Verstellrichtung einander gegenüberliegenden Steuerflächen angeordnet ist, die mit dem über die hydraulische Vorsteuerung geleiteten Steueröl zur Bewegung des Schließkörpers in der Ventilhülse beaufschlagbar sind, und dass die in die Bohrung des Ventilblockes eingesteckte Ventilhülse an dem Ventildeckel festgelegt ist und dadurch der an der Ventilhülse ausgebildete Ventilsitz beim Betrieb der Ventilanordnung einen unveränderten Abstand zum Ventildeckel einhält.

Mit der Erfindung ist der Vorteil verbunden, dass aufgrund der bezüglich des auf der Zuströmseite einwirkenden Drucks druckausgeglichenen Anordnung des Schließkörpers in der Ventilhülse nur sehr geringe Steuerkräfte erforderlich sind, um die Umsteuerung de Schließkörpers von der Schließstellung in die Öffnungsstellung und umgekehrt zu bewirken. Aus diesem Grunde reichen kleine Steuerflächen aus, wie sie an dem umlaufenden Bund des Schließkörpers vorgesehen sind. Hieraus ergibt sich die vorteilhafte Auswirkung einer Verringerung des in der hydraulischen Vorsteuerung einzustellenden Drucks wie auch der über die Vorsteuerung zu führenden Steuerölmenge. Da aufgrund des geringen Steuerdrucks von dem Schließkörper keine Druckbelastung in Richtung der Ventilhülse mehr ausgeht, ist es nunmehr möglich, die Ventilhülse an dem Ventildeckel zu haltern, so dass die Ventilhülse und damit der an der Ventilhülse ausgebildete Ventilsitz immer eine gleiche, unveränderte Lage zum Ventildeckel aufweist. Damit liegt auch der Öffnungspunkt des Einbauventils jeweils fest und ist bei der Montage des Einbauventils in der Bohrung des Ventilblocks wie auch beim Betrieb des Einbauventils keinen Änderungen unterworfen.

Aufgrund der fehlenden Druckausübung von dem Schließkörper auf die Ventilhülse ist es nicht mehr erforderlich, die Ventilhülse in dem Ventilblock abzustützen und insoweit die Bohrung zur Aufnahme des Einbauventils gestuft auszubilden. Da die Ventilhülse erfindungsgemäß an dem Ventildeckel gehaltert ist, ist es ausreichend, dass der im Ventilblock in der Verstellrichtung des Schließkörpers des Einbauventils verlaufend ausgebildete Strömungskanal den gleichen Durchmesser aufweist, wie die der Aufnahme des Einbauventils dienende Bohrung. Hiermit ist der Vorteil verbunden, dass bei gleichem Bohrungsaufwand die Menge der durch den Ventilblock zu leitenden Flüssigkeit vergrößert ist.

In einer ersten Ausführungsform der Erfindung kann vorgesehen sein, dass die Ventilhülse an dem Ventildeckel mittels den Ventildeckel durchgreifender und in die Hülsenwandung eingeschraubter Schrauben gehalten ist.

In einer alternativen Ausführungsform kann vorgesehen sein, dass die ein Außengewinde aufweisende Ventilhülse in eine in dem Ventildeckel ausgebildete und mit Innengewinde versehene Öffnung eingeschraubt und dadurch an dem Ventildeckel in einer definierten Lage festgelegt ist.

Soweit das über die hydraulische Vorsteuerung geleitete Steueröl die Bewegung des Schließkörpers herbeiführen soll, ist nach einem Ausführungsbeispiel der Erfindung vorgesehen, dass der Bund des Schließkörpers mit den daran ausgebildeten Steuerflächen in einem Steuerölraum angeordnet ist, dessen beiderseits des Bundes liegende Bereiche über jeweils eine Steuerölbohrung mit der hydraulischen Vorsteuerung verbunden sind.

Hinsichtlich der Anordnung des Steuerölraums ist gemäß einer ersten Ausführungsform der Erfindung vorgesehen, dass der Bund des Schließkörpers an einem außerhalb der Ventilhülse gelegenen Bereich des Schließkörpers angeordnet ist und dass Steuerölraum und Steuerölbohrungen in dem Ventildeckel angeordnet sind. Bei diesem Ausführungsbeispiel ist die gesamte hydraulische Steuerung der Bewegung des Schließkörpers im Ventildeckel untergebracht. Hierbei kann vorgesehen sein, dass der die Steuerflächen ausbildende Bund des Schließkörpers mit seinem Außendurchmesser den Außendurchmesser der Ventilhülse nicht überragt.

Im Hinblick auf eine Verringerung der Bauform ist in einer alternativen Ausführungsform der Erfindung vorgesehen, dass der Bund des Schließkörpers an einem innerhalb der Ventilhülse gelegenen Bereich des Schließkörpers angeordnet und der Steuerölraum in der Wandung der Ventilhülse ausgebildet ist. Bei diesem Ausführungsbeispiel sind die die Bewegung des Schließkörpers herbeiführenden Ausprägungen nun in den Bereich der Ventilhülse verlegt, so dass im Ventildeckel lediglich noch die Steuerölbohrungen untergebracht sind.

Nach einem Ausführungsbeispiel der Erfindung kann die Ventilhülse noch in den Ventildeckel hineinreichen, was die Möglichkeit gibt, dass der den Steuerölraum aufweisende Bereich der Ventilhülse im Ventildeckel liegt und die Steuerölbohrungen im Ventildeckel verlaufen.

Alternativ ist es zweckmäßig, wenn der Steuerölraum in dem in einer Bohrung des Ventilblocks gelegenen Bereich der Ventilhülse angeordnet ist und dass die Steuerölbohrungen von der an den Ventildeckel angrenzenden Stirnfläche der Ventilhülse durch die Wandung der Ventilhülse bis zum Steuerölraum verlaufen, wobei in zweckmäßiger Weise die durch den Ventildeckel die durch den Ventildeckel verlaufenden Steuerölbohrungen ihren Ausgang von der Oberseite des Ventildeckels nehmen und parallel zu den die Ventilhülse an dem Ventildeckel festlegenden Schrauben verlaufen und sich entsprechend in der Wandung der Ventilhülse fortsetzen.

Soweit die Ventilhülse nunmehr auf ihrer Stirnseite nicht mehr gegen eine Bohrungsstufe anliegt und insoweit an dieser Stelle nicht mehr abgedichtet werden kann, ist gemäß der Erfindung nach einem Ausführungsbeispiel vorgesehen, dass die in die Bohrung des Ventilblocks eingesetzte Ventilhülse auf ihrem äußeren Umfang gegen den Ventilblock mittels einer zwischengesetzten Dichtung abgedichtet ist.

Wie beim Stand der Technik auch, kann vorgesehen sein, dass der Schließkörper durch eine sich im Ventildeckel abstützende Feder in seine am Ventilsitz der Ventilhülse anliegende Schließstellung vorgespannt ist.

In der Zeichnung sind Ausführungsbeispiele der Erfindung wiedergegeben, welche nachstehend beschrieben sind. Es zeigen:
- Fig. 1: ein in einem Ventilblock eingebautes Einbauventil in einer schematischen Darstellung bei in dem Ventildeckel angeordneter hydraulischer Vorsteuerung,
- Fig. 2: den Gegenstand der Figur 1 in einer anderen Ausführungsform mit einer weitgehend in die Ventilhülse verlegten Steuerung des Ventilgliedes.

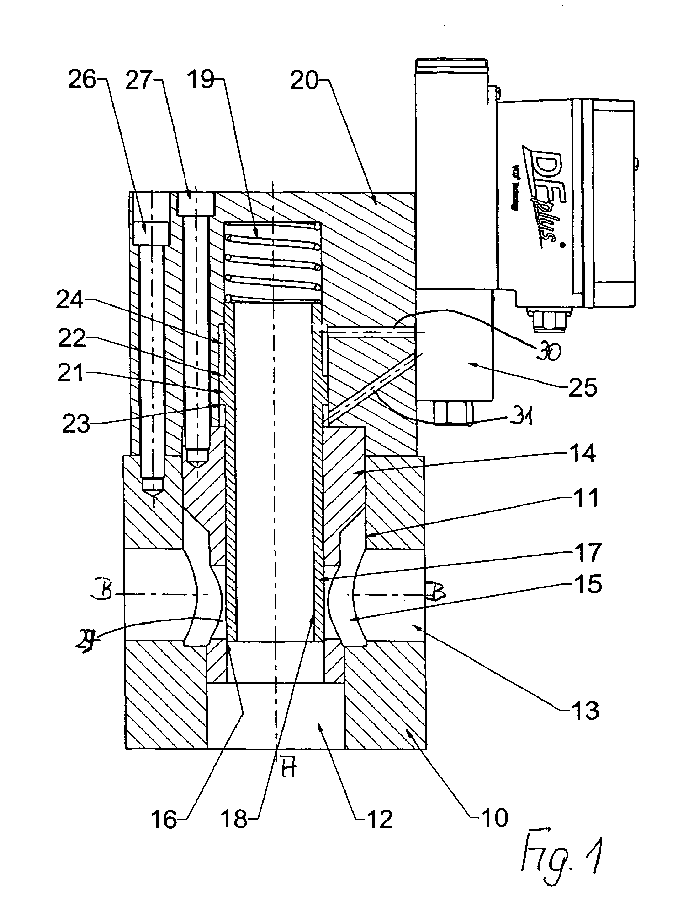

Gemäß dem in Figur 1 dargestellten Ausführungsbeispiel ist in einem Ventilblock 10 eine Bohrung 11 zur Aufnahme eines noch zu beschreibenden Einbauventils eingebracht. In dem Ventilblock 10 sind ferner ein Strömungskanal 12 (Anschluss A) und ein Strömungskanal 13 (Anschluss B) angeordnet, die jeweils so mit der Bohrung 11 in Verbindung stehen, dass die Verbindung zwischen den Strömungskanälen 12 und 13 durch das in die Bohrung 11 eingesetzte Einbauventil geschlossen oder geöffnet sein kann. Die Bohrung 11 ist durch einen auf den Ventilblock 10 aufgesetzten und mittels Schrauben 26 damit fest verschraubten Ventildeckel 20 verschlossen.

Das in die Bohrung 11 des Ventilblocks 10 eingesetzte Einbauventil besteht aus einer in die Bohrung 11 eingesetzten Ventilhülse 14, in der ein Schließkörper 17 beweglich ist. Die Ventilhülse 14 weist im Bereich des von der Bohrung 11 abgehenden Strömungskanals 13 (Anschluss B) mehrere Öffnungen 29 zum Austritt der über den Strömungskanal 12 (Anschluss A) in den Ventilblock 10 eingeleiteten Hydraulikflüssigkeit auf, und zur Aufnahme der aus der Ventilhülse 14 austretenden Hydraulikflüssigkeit ist die Bohrung 11 um eine die Ventilhülse 14 umschließende Auskesselung 15 erweitert, die ein Umströmen des aus der Ventilhülse 14 austretenden Hydrauliköls zum Strömungskanal 13 hin ermöglicht. In ihrem Tiefsten weist die Ventilhülse 14 einen Ventilsitz 16 für den Schließkörper 17 auf, der in seiner auf dem Ventilsitz 16 aufsitzenden Schließstellung den Strömungskanal 12 (Anschluss A) gegen den Strömungskanal 13 (Anschluss B) sperrt.

Der Schließkörper 17 weist eine sich über dessen Länge erstreckende Durchgangsbohrung 18 auf, so dass der Schließkörper 17 seinerseits nach Art einer Hülse mit an seinen beiden Enden jeweils ausgebildeten Ringflächen mit identischer Flächengröße ausgebildet ist. In dem Ventildeckel 20 ist eine mit der Durchgangsbohrung 18 des Schließkörpers 17 korrespondierende Druckausgleichskammer 19 ausgebildet, so dass der Schließkörper auch in seiner Schließstellung beidseitig mit dem vom Strömungskanal 12 (Anschluss A) her einwirkenden Druck beaufschlagt und in der Ventilhülse 14 vollständig druckausgeglichen gelagert ist. In der Druckausgleichskammer 19 ist eine den Schließkörper 17 in seiner am Ventilsitz 16 der Ventilhülse 14 anliegende Schließstellung vorspannende Feder angeordnet.

Zu seiner Verstellung ist an dem Schließkörper 17 in dessen in den Ventildeckel 20 reichenden Bereich ein radial vorstehender Bund 21 mit in der Verstellrichtung einander gegenüberliegenden Steuerflächen 22 und 23 ausgebildet, wobei der Bund 21 mit Steuerflächen 22, 23 in einem Steuerölraum 24 angeordnet ist, der seinerseits über Steuerölbohrungen 30, 31 an eine bei dem dargestellten Ausführungsbeispiel auf den Ventildeckel 20 aufgesetzte und entsprechend mit dem Steuerölraum 24 verbundene hydraulische Vorsteuerung 25 angeschlossen ist. Bei dem in Figur 1 dargestellten Ausführungsbeispiel ist damit die für die Steuerung der Bewegung des Schließkörpers 17 vorgesehene hydraulische Vorsteuerung vollständig im Ventildeckel 20 untergebracht.

Die Ventilhülse 14 ist über den Ventildeckel 20 durchgreifende und in die Wandung der Ventilhülse 14 eingreifende Schrauben 27 an dem Ventildeckel 20 gehaltert.

Es ist weiterhin zu erkennen, dass im Vergleich mit dem Stand der Technik, insbesondere mit dem durch die DIN ISO 7368 vorgegebenen Bohrungsbild, die Anschlussbohrung 12 den gleichen Durchmesser bzw. Querschnitt hat, wie die in den Ventilblock 10 eingebrachte Bohrung 11 zur Aufnahme des Einbauventils ohne Berücksichtigung der die Bohrung 11 erweiternden Auskesselung 15. Soweit somit über den Anschluss A (Strömungskanal 12) eine wesentlich größere Menge an Hydraulikflüssigkeit in den Ventilblock eingeleitet werden kann, ist schematisch ein zweiter Anschluss B angedeutet, um im Vergleich mit dem Stand der Technik deutlich zu machen, dass auch eine entsprechend größere Menge an Hydraulikflüssigkeit über zwei Anschlüsse B abzuführen ist. Selbstverständlich kann auch der Strömungskanal 13 (Anschluss B) mit einer entsprechenden Größe ausgelegt sein.

Aufgrund der druckausgeglichenen Lage des Schließkörpers 17 in der Ventilhülse 14 kann der Schließkörper 17 über die hydraulische Vorsteuerung 25 und die an seinem Bund 21 angeordneten Steuerflächen 22 und 23 durch jeweils in der gewünschten Bewegungsrichtung des Schließkörpers 17 in den Steuerölraum 24 eingeleitetes Steueröl in der gewünschten Richtung verstellt werden, wobei nur geringe Steuerkräfte erforderlich sind. Da aufgrund dieser geringen Steuerkräfte der Schließkörper 17 in seiner Schließstellung keine maßgebliche Kraft auf die Ventilhülse 14 bzw. auf deren Ventilsatz 16 ausübt, ist es ausreichend, wenn die Ventilhülse 14 über entsprechend angeordnete Schrauben 27 an dem Ventildeckel 20 gehaltert ist. Damit ist sichergestellt, dass der an der Ventilhülse 14 ausgebildete Ventilsitz 16 jeweils einen gleichen, unveränderten Abstand zum Ventildeckel 20 aufweist, so dass auch der durch Abheben des Schließkörpers 17 von dem Ventilsitz 16 bestimmte Öffnungspunkt des Einbauventils keine Veränderungen erfährt.

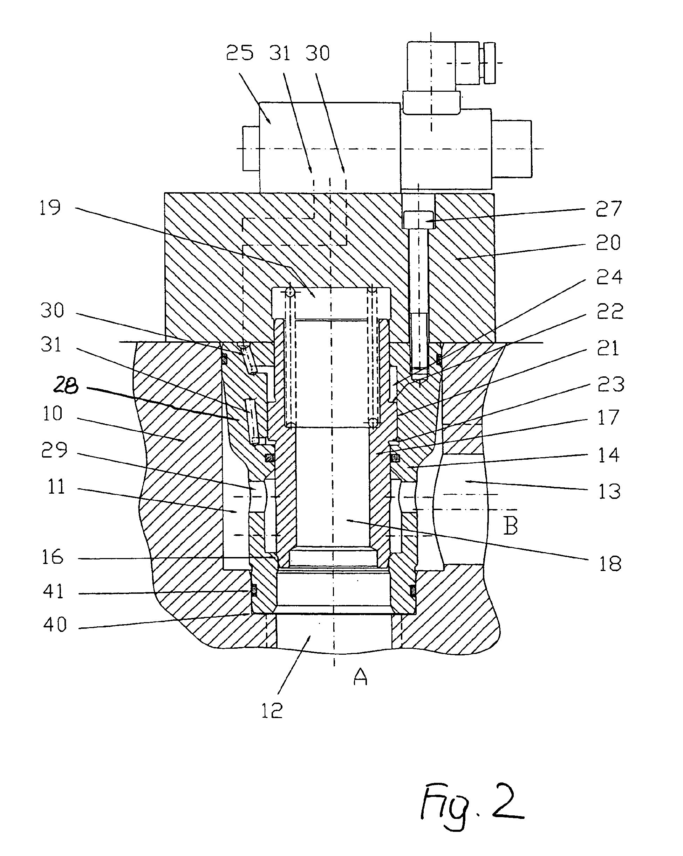

Das in Figur 2 dargestellte Ausführungsbeispiel unterscheidet sich von der vorstehend zu Figur 1 beschriebenen Ausführungsform im wesentlichen dadurch, dass der Steuerölraum 24 mit dem darin geführten Bund 21 des Schließkörpers 17 in die Ventilhülse 14 hineinverlegt ist, indem nun der Steuerölraum 24 in der Wandung 28 der Ventilhülse 14 ausgebildet ist, und zwar in einem Bereich der Ventilhülse 14, der vollständig im Inneren der Bohrung 11 des Ventilblocks 10 gelegen ist. Bei dem dargestellten Ausführungsbeispiel ist die Ventilhülse 14 des eingebauten Einbauventils somit weitgehend im Ventilblock 10 aufgenommen und ragt mit ihrer Stirnfläche nur noch geringfügig über die Oberfläche des Ventilblocks 10 hinaus und entsprechend in die im Ventildeckel 20 ausgebildete Druckausgleichskammer 19 hinein. Wie nicht weiter dargestellt, kann die Ventilhülse 14 des eingebauten Einbauventils aber auch vollständig im Ventilblock 10 aufgenommen sein und mit ihrer Stirnfläche gegen den Ventildeckel 20 abschließen.

Dies bedeutet, dass auch die beiden zu dem Steuerölraum 24 führenden Steuerölbohrungen 30, 31 in ihrem im Ventilblock liegenden Bereich in der Wandung 28 der Ventilhülse 14 bis zu der an dem Ventildeckel 20 angrenzenden Stirnfläche der Ventilhülse verlaufen und sich dann durch den auf dem Ventilblock 10 aufliegenden und mit diesem verschraubten Ventildeckel 20 bis zu der auf dem Ventildeckel 20 angebrachten Vorsteuerung 25 fortsetzen. Insofern ist bei dem aus Figur 2 ersichtlichen Ausführungsbeispiel die die Bewegung des Schließkörpers 17 herbeiführende Steuerung in die Ventilhülse 14 verlegt, so dass im Ventildeckel 20 lediglich noch die Druckausgleichskammer 19 und die zur hydraulischen Vorsteuerung 25 führenden Steuerölbohrungen 30, 31 ausgebildet sein müssen.

Bei dem in Figur 2 dargestellten Ausführungsbeispiel ist ferner die Bohrung 11 in Abwandlung zu dem zu Figur 1 beschriebenen Ausführungsbeispiel gestuft ausgebildet, so dass die Ventilhülse 14 auf der so gebildeten Stufe 40 aufsteht und auf ihrem äußeren Umfang mittels einer Dichtung 41 gegen den Ventilblock 10 abgedichtet ist. Ferner ist nur ein Strömungskanal 13 (Anschluss B) vorhanden.

Die Funktion des in Figur 2 dargestellten Einbauventils vollzieht sich wie zu dem in Figur 1 dargestellten Ausführungsbeispiel beschrieben.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Hydraulische Ventilanordnung mit einem in eine in einem Ventilblock (10) ausgebildete und mit in dem Ventilblock (10) angeordneten) Strömungskanälen (12, 13) in Verbindung stehende Bohrung (11) eingestecktem Einbauventil, bestehend aus einer in die Bohrung (11) eingesetzten Ventilhülse (14) und einem darin geführten Schließglied, wobei die Ventilhülse (14) einen Ventilsitz (16) für das Schließglied in dessen Schließstellung ausbildet und das Schließglied mittels einer angeschlossenen hydraulischen Vorsteuerung zwischen seiner auf dem Ventilsitz (16) aufsitzenden und die Strömungskanäle (12, 13) gegeneinander trennenden Schließstellung und einer in der Ventilhülse (14) verschobenen Öffnungsstellung bewegbar ist und die Bohrung (11) mit dem darin eingesteckten Einbauventil über einen mit dem Ventilblock (10) verbundenen Ventildeckel (20) dicht verschlossen ist, **dadurch gekennzeichnet, dass** das Schließglied als ein eine Durchgangsbohrung (18) und dadurch an seinen beiden Enden jeweils Ringflächen mit identischer Flächengröße aufweisender hülsenförmiger Schließkörper (17) ausgebildet und in dem Ventildeckel (20) eine mit der Durchgangsbohrung (18) des Schließkörpers (17) korrespondierende Druckausgleichskammer (19) ausgebildet ist derart, dass der Schließkörper (17) beidseitig mit dem in seiner Verstellrichtung wirkenden Druck beaufschlagt und in der Ventilhülse (14) vollständig druckausgeglichen gelagert ist, wobei zur Verstellung des Schließkörpers (17) an dessen äußerem Umfang ein radial vorstehender Bund (21) mit in der Verstellrichtung einander gegenüberliegenden Steuerflächen (22, 23) angeordnet ist, die mit dem über die hydraulische Vorsteuerung (25) geleiteten Steueröl zur Bewegung des Schließkörpers (17) in der Ventilhülse (14) beaufschlagbar sind, und dass die in die Bohrung (11) des Ventilblockes eingesteckte Ventilhülse (14) an dem Ventildeckel (20) festgelegt ist und dadurch der an der Ventilhülse (14) ausgebildete Ventilsitz (16) beim Betrieb der Ventilanordnung einen unveränderten Abstand zum Ventildeckel (20) einhält.

2. Hydraulische Ventilanordnung nach Anspruch 1, **dadurch gekennzeichnet, dass** der im Ventilblock (10) in der Verstellrichtung des Schließkörpers (17) des Einbauventils verlaufend ausgebildete Strömungskanal (12) einen dem Außendurchmesser der eingesteckten Ventilhülse (14) entsprechenden Innendurchmesser aufweist.

3. Hydraulische Ventilanordnung nach Anspruch 1 oder 2, **dadurch gekennzeichnet, dass** die Ventilhülse (14) an dem Ventildeckel (20) mittels den Ventildeckel (20) durchgreifender und in die Hülsenwandung eingeschraubter Schrauben (27) gehalten ist.

4. Hydraulische Ventilanordnung nach Anspruch 1 oder 2, **dadurch gekennzeichnet, dass** die ein Außengewinde aufweisende Ventilhülse (14) in eine in den Ventildeckel (20) ausgebildete und mit Innengewinde versehene Öffnung eingeschraubt und dadurch an dem Ventildeckel (20) in einer definierten Lage festgelegt ist.

5. Hydraulische Ventilanordnung nach einem der Ansprüche 1 bis 4, **dadurch gekennzeichnet, dass** der Bund (21) des Schließkörpers (17) mit den daran ausgebildeten Steuerflächen (22, 23) in einem Steuerölraum (24) angeordnet ist, dessen beiderseits des Bundes (21) liegende Bereiche über jeweils eine Steuerölbohrung (30, 31) mit der hydraulischen Vorsteuerung (25) verbunden sind.

6. Hydraulische Ventilanordnung nach Anspruch 5, **dadurch gekennzeichnet, dass** der Bund (21) des Schließkörpers (17) an einem außerhalb der Ventilhülse (14) gelegenen Bereich des Schließkörpers (17) angeordnet ist und dass Steuerölraum (24) und Steuerölbohrungen (30, 31) in dem Ventildeckel (20) angeordnet sind.

7. Hydraulische Ventilanordnung nach Anspruch 5 oder 6, **dadurch gekennzeichnet, dass** der die Steuerflächen (22, 23) ausbildende Bund (21) des Schließkörpers (17) mit seinem Außendurchmesser den Außendurchmesser der Ventilhülse (14) nicht überragt.

8. Hydraulische Ventilanordnung nach Anspruch 5, **dadurch gekennzeichnet, dass** der Bund (21) des Schließkörpers (17) an einem innerhalb der Ventilhülse (14) gelegenen Bereich des Schließkörpers (17) angeordnet und der Steuerölraum (24) in der Wandung (28) der Ventilhülse (14) ausgebildet ist.

9. Hydraulische Ventilanordnung nach Anspruch 8, **dadurch gekennzeichnet, dass** der den Steuerölraum (24) aufweisende Bereich der Ventilhülse (14) im Ventildeckel (20) liegt und die Steuerölbohrungen (30, 31) im Ventildeckel (20) verlaufen.

10. Hydraulische Ventilanordnung nach Anspruch 3 und 8, **dadurch gekennzeichnet, dass** der Steuerölraum (24) in dem in einer Bohrung (11) des Ventilblocks (10) gelegenen Bereich der Ventilhülse (14) angeordnet ist und dass die Steuerölbohrungen (30, 31) von der an den Ventildeckel (20) angrenzenden Stirnfläche der Ventilhülse (14) durch die Wandung (28) der Ventilhülse (14) bis zum Steuerölraum (24) verlaufen.

11. Hydraulische Ventilanordnung nach Anspruch 10, **dadurch gekennzeichnet, dass** die durch den Ventildeckel (20) verlaufenden Steuerölbohrungen (30, 31) ihren Ausgang von der Oberseite des Ventildeckels (20) nehmen und parallel zu den die Ventilhülse (14) an dem Ventildeckel (20) festlegenden Schrauben (27) verlaufen und sich entsprechend in der Wandung (28) der Ventilhülse (14) fortsetzen.

12. Hydraulische Ventilanordnung nach einem der Ansprüche 1 bis 11, **dadurch gekennzeichnet, dass** die in die Bohrung (11) des Ventilblocks (10) eingesetzte Ventilhülse (14) auf ihrem äußeren Umfang gegen den Ventilblock (10) mittels einer zwischengesetzten Dichtung (41) abgedichtet ist.

13. Hydraulische Ventilanordnung nach einem der Ansprüche 1 bis 12, **dadurch gekennzeichnet, dass** der Schließkörper (17) durch eine sich im Ventildeckel (20) abstützende Feder in seine am Ventilsitz (16) der Ventilhülse (14) anliegende Schließstellung-vorgespannt ist

## Claims

1. A hydraulic valve assembly having a cartridge insert valve in a bore hole (11) designed in a valve block (10) and connected to flow channels (12, 13) arranged in the valve block (10), comprising a valve sleeve (14) inserted in the bore hole (11) and a closing member guided within said valve sleeve, wherein the valve sleeve (14) forms a valve seat (16) for the closing member in the closing position thereof and the closing member can be moved by means of a connected hydraulic pre-control between the closing position thereof seated on the valve seat (16) and separating the flow channels (12, 13) from one another, and an opened position displaced within the valve sleeve (14), and the bore hole (11) with the cartridge insert valve inserted therein is sealed tight by means of a valve cover (20) connected to the valve block (10), **characterized in that** the closing member is formed as a sleeve-shaped closing element (17) exhibiting a through-hole (18) and thus having ring surfaces having identical areas on both ends thereof, and a pressure-equalizing chamber (19) corresponding with the through-hole (18) of the closing element (17) is formed within the valve cover (20) such that the closing element (17) is engaged on both sides with the pressure enacting in the adjustment direction of the element and is seated completely pressure-equalized in the valve sleeve (14) wherein a radially protruding collar (21) having control surfaces (22, 23) opposite one another in the adjustment direction is arranged on the outer circumference of the closing element (17) for adjustment thereof, the control surfaces being loadable by the control oil conducted via the hydraulic pre-control (25) for moving the closing element (17) in the valve sleeve (14), and that the valve sleeve (14) inserted in the bore hole (11) of the valve block is fastened on the valve cover (20), the valve seat (16) formed on the valve sleeve (14) thereby maintaining an unaltered distance from the valve cover (20) during operation of the valve assembly.

2. A hydraulic valve assembly according to claim 1, **characterized in that** the flow channel (12) formed in the valve block (10) in the adjustment direction of the closing element (17) of the cartridge insert valve has an inner diameter corresponding to the outer diameter of the inserted valve sleeve (14).

3. A hydraulic valve assembly according to claim 1 or 2, **characterized in that** the valve sleeve (14) is held on the valve cover (20) by means of screws (27) that go through the valve cover (20) into the sleeve wall.

4. A hydraulic valve assembly according to claim 1 or 2, **characterized in that** the valve sleeve (14) having an outer threading is screwed into an opening formed in the valve cover (20) being provided with an inner threading and thereby is fixed to the valve cover (20) in a defined position.

5. A hydraulic valve assembly according to one of claims 1 through 4, **characterized in that** the collar (21) of the closing element (17) having the control surfaces (22, 23) formed on it is arranged in a control-oil space (24), whose regions on both sides of the collar (21) are each connected to the hydraulic pre-control (25) through a control-oil bore hole (30, 31).

6. A hydraulic valve assembly according to claim 5, **characterized in that** the collar (21) of the closing element (17) is arranged on a region of the closing element (17) outside the valve sleeve (14) and that the control-oil space (24) and the control-oil bore holes (30, 31) are arranged within the valve cover (20).

7. A hydraulic valve assembly according to claim 5 or 6, **characterized in that** the collar (21) forming the control surfaces (22, 23) of the closing element (17) does not extend with its outer diameter beyond the outer diameter of the valve sleeve (14).

8. A hydraulic valve assembly according to claim 5, **characterized in that** the collar (21) of the closing element (17) is arranged on a region of the closing element lying inside the valve sleeve (14) and the control-oil space (24) is formed within the wall (28) of the valve sleeve (14).

9. A hydraulic valve assembly according to claim 8, **characterized in that** the region of the valve sleeve (14) having the control-oil space (24) lies within the valve cover (20) and the control-oil bore holes (30, 31) run within the valve cover (20).

10. A hydraulic valve assembly according to claim 3 and 8, **characterized in that** the control-oil space (24) is arranged in the region of the valve sleeve (14) located within a bore hole (11) of the valve block (10) and that the control-oil bore holes (30, 31) run from the front surface of the valve sleeve (14) adjacent to the valve cover (20) through the wall (28) of the valve sleeve (14) to the control-oil space (24).

11. A hydraulic valve assembly according to claim 10, **characterized in that** the control-oil bore holes (30, 31) running through the valve cover (20) start from the upper side of the valve cover (20) and run parallel to the screws (27) fastening the valve sleeve (14) to the valve cover (20) and continue correspondingly within the wall (28) of the valve sleeve (14).

12. A hydraulic valve assembly according one of claims 1 through 11, **characterized in that** the valve sleeve (14) inserted in the bore hole (11) of the valve block (10) is sealed on its outer circumference against the valve block (10) by means of a seal (41) placed between them.

13. A hydraulic valve assembly according to one of claims 1 through 12, **characterized in that** the closing element (17) is pre-stressed by a spring supported in the valve cover (20) in its closed position abutting on the valve seat (16) of the valve sleeve (14).

## Revendications

1. Agencement de soupape hydraulique avec une soupape intégrée emboîtée dans un perçage (11) réalisé dans un bloc de soupape (10) et en liaison avec des canaux d'écoulement (12, 13) disposés dans le bloc de soupape (10), se composant d'une douille de soupape (14) insérée dans le perçage (11) et d'un organe de fermeture guidé dedans, sachant que la douille de soupape (14) réalise un siège de soupape (16) pour l'organe de fermeture dans sa position de fermeture et l'organe de fermeture peut être déplacé, à l'aide d'une précommande hydraulique raccordée, entre sa position de fermeture logeant sur le siège de soupape (16) et séparant les canaux d'écoulement (12, 13) l'un de l'autre et une position d'ouverture décalée dans la douille de soupape (14) et le perçage (11) est fermé de manière étanche par la soupape intégrée emboîtée dedans via un couvercle de soupape (20) relié au bloc de soupape (10), **caractérisé en ce que** l'organe de fermeture est réalisé comme un corps de fermeture (17) en forme de douille présentant un perçage débouchant (18) et par là-même sur ses deux extrémités respectivement des surfaces annulaires avec une superficie identique et une chambre de compensation de pression (19) correspondant au perçage débouchant (18) du corps de fermeture (17) est réalisée dans le couvercle de soupape (20) de telle manière que le corps de fermeture (17) soit sollicité des deux côtés par la pression agissant dans son sens de déplacement et soit logé avec une compensation de pression complète dans la douille de soupape (14), sachant qu'un collet (21) dépassant radialement avec des surfaces de commande (22, 23) opposées dans le sens de déplacement est disposé pour le déplacement du corps de fermeture (17) sur sa périphérie extérieure, lesquelles surfaces de commande peuvent être sollicitées par l'huile de commande dirigée par la précommande hydraulique (25) pour le déplacement du corps de fermeture (17) dans la douille de soupape (14), et **en ce que** la douille de soupape (14) emboîtée dans le perçage (11) du bloc de soupape est fixée sur le couvercle de soupape (20) et le siège de soupape (16) réalisé sur la douille de soupape (14) conserve par là-même une distance inchangée par rapport au couvercle de soupape (20) lors du fonctionnement de l'agencement de soupape.

2. Agencement de soupape hydraulique selon la revendication 1, **caractérisé en ce que** le canal d'écoulement (12) réalisé de manière à s'étendre dans le bloc de soupape (10) dans le sens de déplacement du corps de fermeture (17) de la soupape intégrée présente un diamètre intérieur correspondant au diamètre extérieur de la douille de soupape (14) emboîtée.

3. Agencement de soupape hydraulique selon la revendication 1 ou 2, **caractérisé en ce que** la douille de soupape (14) est maintenue sur le couvercle de soupape (20) à l'aide de vis (27) serrées dans la paroi de douille et pénétrant le couvercle de soupape (20).

4. Agencement de soupape hydraulique selon la revendication 1 ou 2, **caractérisé en ce que** la douille de soupape (14) présentant un filetage extérieur est vissée dans une ouverture pourvue d'un filetage intérieur et réalisée dans le couvercle de soupape (20) et est fixée par là-même sur le couvercle de soupape (20) dans une position définie.

5. Agencement de soupape hydraulique selon l'une quelconque des revendications 1 à 4, **caractérisé en ce que** le collet (21) du corps de fermeture (17) avec les surfaces de commande (22, 23) réalisées dessus est disposé dans un espace d'huile de commande (24), dont les zones se trouvant de part et d'autre du collet (21) sont reliées par respectivement un perçage d'huile de commande (30, 31) à la précommande hydraulique (25).

6. Agencement de soupape hydraulique selon la revendication 5, **caractérisé en ce que** le collet (21) du corps de fermeture (17) est disposé sur une zone placée en dehors de la douille de soupape (14) du corps de fermeture (17) et **en ce que** l'espace d'huile de commande (24) et les perçages d'huile de commande (30, 31) sont disposés dans le couvercle de soupape (20).

7. Agencement de soupape hydraulique selon la revendication 5 ou 6, **caractérisé en ce que** le diamètre extérieur du collet (21) du corps de fermeture (17) réalisant les surfaces de commande (22, 23) ne dépasse pas du diamètre extérieur de la douille de soupape (14).

8. Agencement de soupape hydraulique selon la revendication 5, **caractérisé en ce que** le collet (21) du corps de fermeture (17) est disposé sur une zone placée dans la douille de soupape (14) du corps de fermeture (17) et l'espace d'huile de commande (24) est réalisé dans la paroi (28) de la douille de soupape (14).

9. Agencement de soupape hydraulique selon la revendication 8, **caractérisé en ce que** la zone présentant l'espace d'huile de commande (24) de la douille de soupape (14) se trouve dans le couvercle de soupape (20) et les perçages d'huile de commande (30, 31) s'étendent dans le couvercle de soupape (20).

10. Agencement de soupape hydraulique selon les revendications 3 et 8, **caractérisé en ce que** l'espace d'huile de commande (24) est disposé dans la zone placée dans un perçage (11) du bloc de soupape (10) de la douille de soupape (14) et **en ce que** les perçages d'huile de commande (30, 31) s'étendent de la surface avant contiguë au couvercle de soupape (20) de la douille de soupape (14) en passant par la paroi (28) de la douille de soupape (14) jusqu'à l'espace d'huile de commande (24).

11. Agencement de soupape hydraulique selon la revendication 10, **caractérisé en ce que** les perçages d'huile de commande (30, 31) s'étendant par le couvercle de soupape (20) prennent leur sortie du côté supérieur du couvercle de soupape (20) et s'étendent parallèlement aux vis (27) fixant la douille de soupape (14) sur le couvercle de soupape (20) et se poursuivent en conséquence dans la paroi (28) de la douille de soupape (14).

12. Agencement de soupape hydraulique selon l'une quelconque des revendications 1 à 11, **caractérisé en ce que** la douille de soupape (14) insérée dans le perçage (11) du bloc de soupape (10) est rendue étanche sur sa périphérie extérieure contre le bloc de soupape (10) à l'aide d'une garniture (41) intercalée.

13. Agencement de soupape hydraulique selon l'une quelconque des revendications 1 à 12, **caractérisé en ce que** le corps de fermeture (17) est précontraint par un ressort s'appuyant dans le couvercle de soupape (20) dans sa position de fermeture reposant contre le siège de soupape (16) de la douille de soupape (14).
